(19) Europäisches Patentamt
European Patent Office
Office européen des brevets

(11) **EP 4 219 414 A1**

(12) **EUROPEAN PATENT APPLICATION**

(43) Date of publication:
**02.08.2023 Bulletin 2023/31**

(21) Application number: **23153230.0**

(22) Date of filing: **25.01.2023**

(51) International Patent Classification (IPC):
*C02F 11/02* (2006.01) *C02F 11/12* (2019.01)
*C02F 3/26* (2023.01) *C02F 3/12* (2023.01)
*C02F 11/121* (2019.01) *C02F 11/13* (2019.01)
*C02F 1/44* (2023.01)

(52) Cooperative Patent Classification (CPC):
**C02F 3/121; C02F 3/26;** C02F 1/444; C02F 3/1221;
C02F 2209/02; C02F 2209/22; C02F 2209/42;
C02F 2301/046; C02F 2301/106

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.01.2022 IT 202200001427**

(71) Applicant: **D.T.A. Srl**
**24047 Treviglio (BG) (IT)**

(72) Inventors:
• **BERTANZA, Giorgio**
**25080 PUEGNAGO (BS)) (IT)**
• **COLLIVIGNARELLI, Mariacristina**
**27036 MORTARA (PV) (IT)**
• **DURANTE, Angela**
**24040 CASIRATE D'ADDA (BG) (IT)**
• **RAVASIO, Pierfrancesco**
**24047 TREVIGLIO (BG) (IT)**

(74) Representative: **Mari, Marco Giovanni et al**
**Ing. Mari & C. S.r.l.**
**Via Garibotti, 3**
**26100 Cremona (IT)**

(54) **REACTOR WITH DOUBLE TREATMENT CHAMBER**

(57) The invention concerns a reactor with dual treatment chamber, particularly for slurry and sludge obtained from biological treatment plants, comprising:
- a first treatment chamber (1);
- a second treatment chamber (2);
- a first duct (4), adapted to hydraulically connect, directly and gravimetrically, said first and second chamber (1, 2);
- a second duct (5), adapted to aeraulically connect said first and second chamber (1, 2) and to maintain their hydrostatic equilibrium,
where the first treatment chamber (1) comprises feed means (IN) of a flow of slurry (11) and oxygenation means (9) adapted to determine a biological oxidation process of said flow of slurry (11) fed inside it and where said second treatment chamber (2) comprises concentration and dewatering means (28) adapted to determine a physical and mechanical treatment process of a fluid residue coming from the first treatment chamber (1).

FIG. 1a

**Description**

Technical field

The invention refers to the sector of reactors for the implementation of biological processes for wastewater treatment and for the treatment of sludge obtained through the purification of slurry by means of aerobic and anaerobic biological processes.

In more detail, the invention relates to a reactor with dual treatment chamber, to obtain a combined thermophilic (aerobic and aerobic/anaerobic) biological and physical process, of the aforesaid types of wastewater.

Background art

Conventional biological (CAS - Conventional Activated Sludge) wastewater treatment processes are known to have the drawbacks of producing:

- a large quantity of biomass in aqueous suspension, which must be subjected to thickening, stabilization and/or dewatering treatment in a specific section of the plant, following chemical conditioning;
- a corresponding and high quantity of semi-solid sludge obtained (dewatered treatment sludge), which must be disposed of as special waste.

Advanced thermophilic (TAMR and TAAMR - Thermophilic Aerobic Membrane Reactor and Thermophilic Aerobic/Anaerobic Membrane Reactor) treatment processes both of the "highly concentrated" liquid waste and of the sludge obtained instead have the drawbacks of:

- requiring optimal process conditions inside the thermophilic reactor, for thermophilic biological oxidation, which do not allow particularly high solid concentrations to be obtained and therefore require a subsequent mechanical/thermal concentration/dewatering treatment stage of the treated flow output from the reactor;
- not allowing mechanical concentration dewatering treatment in the usual dedicated equipment in the sludge line of treatment plants, unless following heavy chemical conditioning of the flow implemented inside specific equipment, due to the chemical-physical features of the treated flow output from the thermophilic reactor;
- increasing management costs due to the cost of the conditioning reagents of the treated flow and of the consequent quantities of sludge produced.

Presentation of the invention

The object of the invention is to overcome the aforesaid drawbacks through the production of a reactor with dual treatment chamber, i.e., comprising two distinct treatment chambers, hydraulically placed in succession and aeraulically connected to each other, i.e., connected both hydraulically and aeraulically, so as to define a single structural and functional unit, where the first chamber is designed for thermophilic biological oxidative treatment of the slurry to be treated, operating at the optimal conditions required by this first process, and the second chamber is designed for the physical-mechanical concentration and dewatering treatment of the liquid residue deriving from the aforesaid oxidative treatment, operating at the different optimal hydraulic and thermal steady state conditions required by said second process with respect to the first.

A further object of the invention is to obtain a drastic reduction of the residual biomass deriving from the degradation biological process of the slurry treated, with a consequent and corresponding reduction of the sludge obtained to be disposed of as special waste and, simultaneously, to obtain an increase of the concentration in percentage of dry substance, equal to or greater than that obtained by current mechanical dewatering plants.

The objects of the invention are achieved with a reactor with dual treatment chamber according to the principal independent claim 1.

Further features of the invention are described in the dependent claims.

A reactor with dual treatment chamber according to the invention produces numerous and important advantages, and in particular:

- by means of a first treatment chamber, it allows the oxidative process of the organic matrix to be carried out at the best hydraulic and thermodynamic conditions, with specific reference to the hydraulic regime established in said first chamber and to the temperature control associated therewith, to the rheological behaviour of the fluid contained in said first chamber, to the diffusion process of the treatment gases in the biomass and to the concentration of the active biomass, achieving as result maximization of the degradation process of the flow being fed and, therefore, minimization of the organic fraction of the liquid discharge to be extracted from the reactor as final residue of the biological process of the slurry fed to the reactor;

- by means of a second treatment chamber, it allows the mechanical dewatering process to be optimized by means of ultrafiltration membranes, being able to operate at temperatures and concentration of suspended solids and rheology of the medium in even harsher conditions than the first chamber, achieving as result maximum reduction of the volumetric quantity of sludge discharge to be extracted from the reactor as final residue of the thermophilic treatment process of the slurry fed to the reactor;
- through the combined action of biological degradation of the organic matter and of volumetric reduction of the flow of slurry fed to the reactor, it allows minimization of the production of sludge obtained from the treatment as excess flow discharged to be sent for recovery and/or for disposal;
- it allows concentration of useful elements in the residual sludge (humus carbon, phosphorus, nitrogen, etc.), which can promote recovery of the final residual flow as an alternative to its disposal as special waste;
- it allows pasteurization of the final residual flow due to the high temperatures and long dwell times in the reactor, which determine a substantial reduction of its pathogen, bacterial and viral load;
- it allows a considerable reduction of treatment costs following minimization and/or valorization of the final residual flow of the treatment process.

Brief description of the drawings

Further features and advantages of the invention will be more apparent from the detailed description set forth below, with the aid of the drawings, which show preferred embodiments, illustrated by way of non-limiting example, wherein:

- Figs. 1a-1b show a schematic front and top view of the general layout of a reactor with dual treatment chamber according to the invention;
- Figs. 2a-2b show a schematic section according to a vertical plane of structural details of a first reaction chamber of said reactor;
- Figs. 3a-3b show a schematization of the plant layout of two variants of hydraulic circuits associable with the first reaction chamber of said reactor;
- Fig. 4 show a schematization of the plant layout of a temperature control circuit associable with the first reaction chamber of said reactor;
- Fig. 5 show a schematization of the plant layout of a temperature control circuit associable with the second reaction chamber of said reactor;
- Figs. 6a-6b-6c show a schematization of different operating conditions of said reactor.

Detailed description of a preferred embodiment of the invention

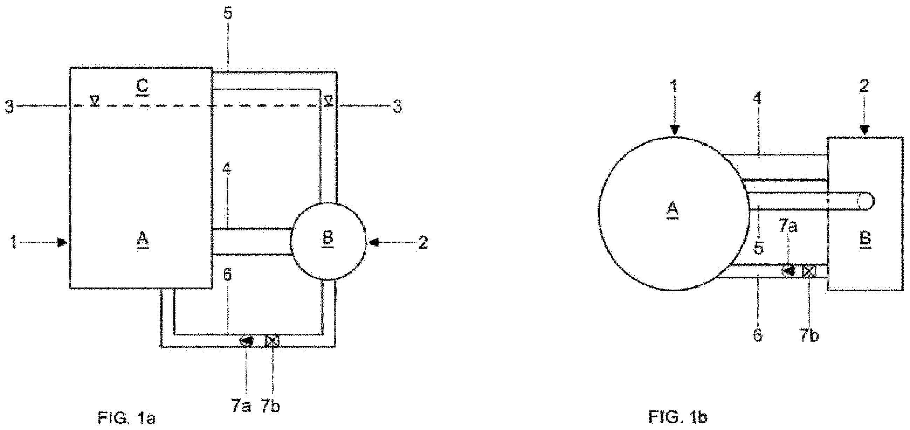

With reference to the details of Figs. 1a and 1b, a reactor with dual treatment chamber according to the invention substantially comprises:

- a first treatment chamber 1, cylindrical, closed and with a vertical axis, adapted to be filled to a predetermined hydrostatic level and to determine a biological oxidation process of a flow of slurry fed inside it;
- a second treatment chamber 2, cylindrical, closed and with a vertical axis, adapted to be completely filled and to determine a concentration and mechanical dewatering process of a fluid residue deriving from the biological oxidation process of the flow of slurry fed inside the first treatment chamber 1;
- a first duct 4, adapted to hydraulically connect, directly and gravimetrically, the chambers 1, 2;
- a second duct 5, emerging from a top area of the second treatment chamber 2 and terminating above the hydrostatic level of the chamber 1, adapted to aeraulically connect the chambers 1, 2 and to maintain their hydrostatic equilibrium;
- a recirculation pipe 6, adapted to connect the chambers 1 and 2, provided with a circulation pump 7a and with a shut-off valve 7b.

In more detail, the first treatment chamber 1 comprises:

- a process zone A, adapted to define an oxygenation tank located in a lower portion of said first treatment chamber 1, dedicated to the performance of biochemical reactions for degradation of the organic substances contained in the flow of slurry fed inside the chamber 1;
- a process zone C, arranged at the top of the chamber 1, above the process zone A, adapted to define a gaseous volume for degassing the slurry being treated in the reactor and to offset the filling and emptying levels of said reactor;

- a liquid/gaseous interface surface 3, defined by the hydrostatic level determined between the two chambers 1, 2, adapted to determine the fill level of the treatment chamber 1 and therefore its useful reaction volume.

The second treatment chamber 2 comprises:

- a process zone B, dedicated to the physical and mechanical concentration and dewatering treatment of the liquid residue coming from the treatment chamber 1.

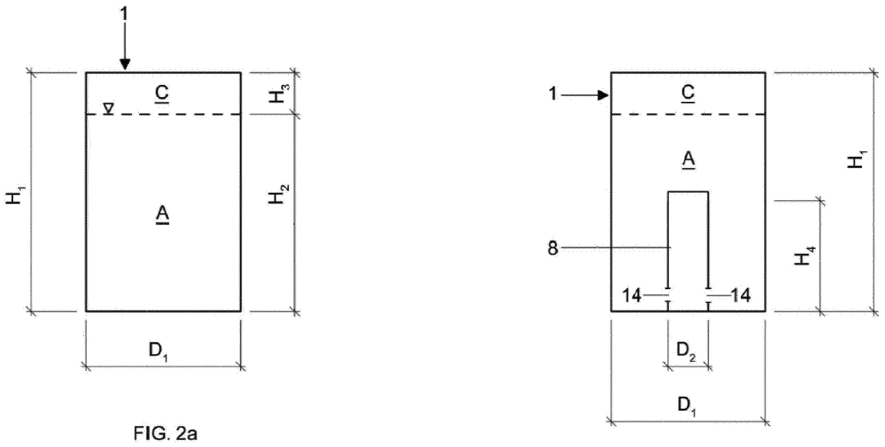

With reference to the details of Fig. 2a, the treatment chamber 1 has a cylindrical structure, extending vertically, and with central axial symmetry, with a height H1 and a diameter D1.
The process zones A, C of the treatment chamber 1 are cylindrical, with respective heights $H_2$, $H_3$ and the same diameter D1, while the process zone B of the treatment chamber 2 is cylindrical with a horizontal axis, with a length $H_5$ and a diameter $D_3$.
The ratios between the heights $H_1$, $H_2$, $H_3$ and the diameter $D_1$ of the process zones A and C of the treatment chamber 1 are indicatively the following:

$$1{,}2 \leq \frac{H_1}{D_1} \leq 1{,}5 \quad ; \quad H_2 \geq D_1 \quad ; \quad H_3 = 0{,}2\,H_2$$

The ratios between the volumes of the process zones A, C, and B of the treatment chambers 1, 2 are indicatively the following: $V_B = V_C = 0{,}1 V_A$
Feed of the slurry to be treated to the reactor takes place in the process zone A of the treatment chamber 1, while extraction of the treated slurry from the reactor takes place in the process zone B of the treatment chamber 2, after its separation into an aqueous fraction (primary), without solids, and into a sludge fraction (secondary), which concentrates the residual solid fraction of the treatment process.
With reference to the details of Fig. 2b, which illustrates a preferred variant, the treatment chamber 1 comprises internally a cylindrical conveyor 8, with a vertical structure and coaxial to said chamber 1, with a height $H_4$ and a diameter $D_2$, open at the top and provided, close to a base, with openings 14.
The ratios between the heights $H_1$, $H_4$ and the diameters $D_1$, $D_2$ of the treatment chamber 1 and of the conveyor 8, which can be inserted inside it, are indicatively the following:

$$3 \leq \frac{D_1}{D_2} \leq 5 \quad ; \quad \frac{H_1}{H_4} = 2$$

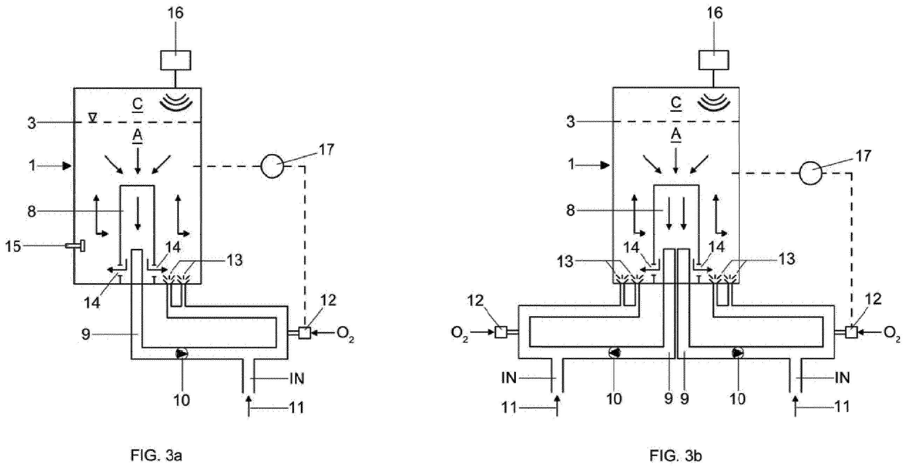

With reference to the details of Fig. 3a, the treatment chamber 1 comprises a hydraulic circuit provided with:

- a recirculation pipe 9 of the slurry being treated in the process zone A of the chamber 1, with suction inlet located at the base of the conveyor 8, coaxially and at a suitable height with respect to it;
- an input point IN of the slurry to be treated into the process zone A of the chamber 1, associated with feed means of said flow of slurry 11, arranged on the pipe 9;
- a primary circulation pump 10, arranged on the pipe 9, adapted to determine the intake and recirculation of the slurry being treated in the lower annular part of the process zone A of the chamber 1, through a plurality of submerged diffusers 13;
- oxygenation means 12 of the type that inject liquid oxygen into the slurry to be treated, arranged on the pipe 9;
- agitator means 15, arranged on the wall of the chamber 1, adapted to reinforce the action of the primary circulation pump 10, to increase mixing in the process zone A of the chamber 1;
- equipment 16, advantageously of radar type, for controlling the hydrostatic level of the liquid/gaseous interface 3 and therefore the reaction volume of the process zone A of the chamber 1;
- equipment 17, advantageously of oxygen meter type, for controlling and regulating the concentration of liquid oxygen injected by the means 12 into the slurry to be treated.

For high oxygen dosages, or as an alternative to the agitator means 15, the hydraulic circuit described above can be duplicated symmetrically, as shown in Fig. 3b.
The arrows indicated in Fig. 3a show how the slurry being treated in the chamber 1 defines, in the lower annular part, an ascending and spiralling convective flow and, in the top cylindrical part, a flow descending inside the conveyor 8. Said descending flow is drawn by the intake pipe 9 of the slurry, by means of the pump 10, and reintroduced into the lower annular part of the chamber 1, by means of the submerged diffusers 13.

The essential operating parameters for the treatment chamber 1 are the liquid/gaseous interface level 3, and therefore its useful reaction volume, and the concentration of the dissolved oxygen reagent, measured and regulated respectively by means of the aforesaid equipment 16, 17, of radar and oxygen meter type.

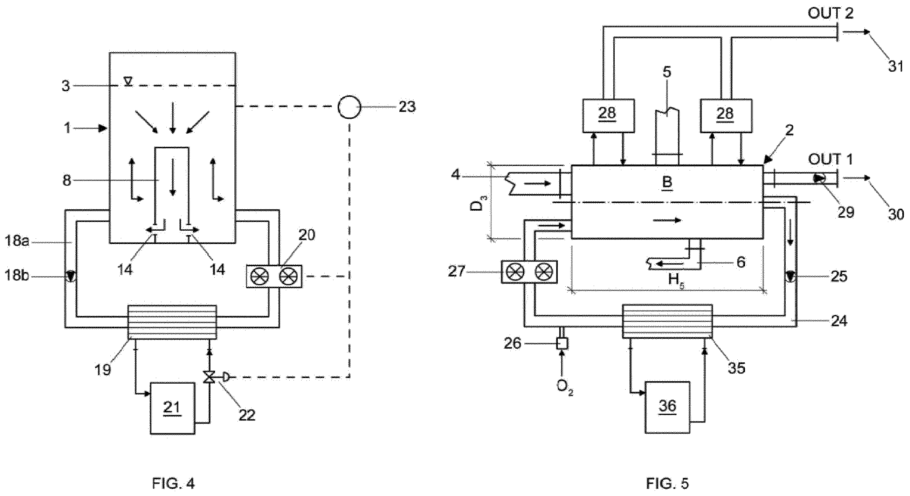

With reference to the details of Fig. 4, the treatment chamber 1 comprises a temperature control circuit, in turn comprising:

- a pipe 18a, communicating with the lower annular part of the process zone A of the chamber 1;
- an auxiliary circulation pump 18b, arranged on the pipe 18a;
- a first heat exchanger 19, of tube bundle type, with water/water exchange, arranged on the pipe 18a;
- a second heat exchanger 21, of cooling tower type, associated with the first heat exchanger 19;
- an optional third heat exchanger 20, of finned pack type, with water/air exchange, integrating the first heat exchanger 19;
- a control unit 23 for controlling and regulating the temperature inside the process zone A of the chamber 1, associated with a valve 22 for regulating circulation of the cooling fluid of the heat exchangers 19 and 21.

With reference to the details of Fig. 5, the treatment chamber 2 has a cylindrical structure with a horizontal axis with hydraulic flow of piston type, with a length $H_5$ and a diameter $D_3$.

The ratios between length $H_5$ and the diameter $D_3$ of the treatment chamber 2 and the diameter D1 of the process zones A, C of the treatment chamber 1 are indicatively the following:

$$H_5 = D_1 \quad ; \quad D_3 = 0{,}25\, H_5$$

With reference to the details of the remaining figures, the treatment chamber 2 comprises:

- at least one ultrafiltration device 28, associated with the process zone B, adapted to determine a mechanical concentration/dewatering treatment of the liquid residue deriving from the biological oxidation treatment of the slurry fed inside the process zone A of the treatment chamber 1;
- an output duct OUT 2 of the aqueous fraction 31 of the liquid residue treated by the ultrafiltration device 28, associated with a control unit 32 for management of the fill level of the reactor;
- an output duct OUT 1 of the sludge fraction 30 of the liquid residue treated in the process zone B of the treatment chamber 2, associated with an extraction pump 29.

Advantageously, the ultrafiltration devices 28 are two or more, placed in parallel with one another, facilitated by the horizontal extension of the process chamber B of the treatment chamber 2, there number being dependent on the hourly/daily quantity of the aqueous fraction 31 produced by them.

The essential operating parameter for the treatment chamber 2 is the pressure inside said chamber, which is always positive and equal to the hydraulic head of the reactor. In this regard, the treatment chamber 2 comprises a safety pressure switch (not illustrated and redundant with respect to the control unit 32) which, if the minimum hydraulic head of the reactor is reached, shuts down operation of the ultrafiltration devices 28.

The treatment chamber 2 is further integrated with:

- the duct 4 for hydraulic connection, directly and below head, with the treatment chamber 1, without shut-off members, so as to allow the continuous passage through gravity in the chamber 2 of the liquid residue deriving from the biological oxidation process of the slurry fed inside the treatment chamber 1;
- the duct 5 for aeraulic connection with the treatment chamber 1, which starts from the upper wall of the treatment chamber 2 and is inserted into the upper margin of the side wall of the treatment chamber 1, above the liquid/gaseous interface surface 3, so as to allow levelling of the fill of the treatment chambers 1, 2, through hydrostatic effect of the start of the communicating vessels, and evacuation of the gases developed in the treatment chamber 2, due to the residual biological oxidative reactions.
- the pipe 6 for connection with the treatment chamber 1, which starts from the lower wall of the treatment chamber 2 and is inserted at the base of the treatment chamber 1 and is intercepted and assisted by the circulation pump 7a and by the related shut-off valve 7b.

With reference to the details of Fig. 5, the treatment chamber 2 comprises a hydraulic circuit provided with:

- a pipe 24, communicating with the process zone B of the chamber 2;

- an auxiliary circulation pump 25, arranged on the pipe 24;
- heat exchangers 35, of tube bundle type, with water/water exchange, and 36T, of cooling tower type, adapted to prevent the operating temperature of the process zone B of the chamber 2 from exceeding a predetermined limit threshold, arranged on the pipe 24;
- an optional heat exchanger 27, of tube bundle type, with water/air exchange, integrating the heat exchangers 35 and 36, arranged on the pipe 24;
- means 26 for injecting liquid oxygen into the process zone B of the chamber 2, adapted to ensure that a minimum quantity of oxygen is maintained inside the process zone B and consequently to avoid the onset of anaerobiosis phenomena inside it, arranged on the pipe 24.

Operation of the invention is described below.

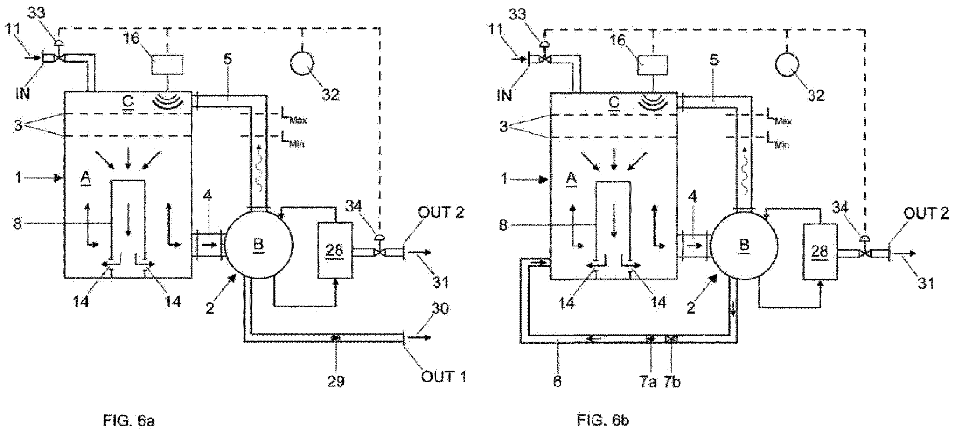

Fig. 6a shows steady state operation of the reactor of the invention following integration and consequent interaction of the treatment chambers 1, 2 and of the respective process zones A, C and B.

The treatment chambers 1, 2 are side by side, the first with a vertical axis, the second with a horizontal axis and assisted by the at least one ultrafiltration unit 28.

The treatment chambers 1, 2 are connected to each other both hydraulically, by means of the duct 4, and aeraulically, by means of the duct 5, where the term aeraulically is meant as a connection that ensures the formation of a single and shared zone C for collecting and venting gases developed in the treatment zones A and B at atmospheric pressure, also ensuring an equal hydrostatic level inside the chambers 1 and 2.

The ducts 4, 5 are free and not interrupted, in order to connect the treatment chambers 1, 2 naturally and directly, without obstructions, so as to structure a single reactor.

The treatment chamber 1 comprises a process zone A, dedicated to the biological oxidative treatment of the slurry fed by means of the input IN of the hydraulic circuit connected to it, and a process zone C, for collecting and venting the gases developed in the remaining process zones A, B.

In Fig. 6a the input point IN of the flow of slurry 11 has been placed at the top of the chamber 1 as a possible alternative to its introduction by means of the duct 9 illustrated in Figs. 3a and 3b.

The treatment chamber 2 comprises a process zone B, for the physical/mechanical concentration/dewatering treatment of the fluid residue coming from the treatment chamber 1.

The input duct IN of the flow of slurry 11 to be treated has corresponding output ducts OUT 1 and OUT 2 of the sludge fraction 30 and of the aqueous fraction 31 of the slurry treated first with the biological degradation process, implemented in the zone A of the chamber 1, and subsequently with the mechanical concentration and dewatering process by means of ultrafiltration, implemented in the zone B of the chamber 2.

The arrows indicated in Fig. 6a show the direction of the slurry being treated from the chamber 1 to the chamber 2, through the duct 4, and of the liquid residue deriving from it from the chamber 2 to the at least one ultrafiltration device 28, which mechanically determines its separation into the sludge fraction 30 and into the aqueous fraction 31.

The sludge fraction 30 is extracted from the process zone B of the treatment chamber 2 by means of the duct OUT 1, which is provided with an extraction pump 29, timed as a function of the small amount of said sludge fraction 30 and of the predetermined level of concentration of solids inside it.

Balancing between the liquid fraction 31, extracted from the zone B of the treatment chamber 2 by means of the duct OUT 2, connected to the ultrafiltration devices 28, and the flow of slurry to be treated 11, introduced into the process zone A of the treatment chamber 1, is managed jointly by the equipment 16, of radar or similar type, which continuously monitors the hydrostatic level of the liquid/gaseous interface 3 of the process zone A of the treatment chamber 1, variable between a maximum level $L_{Max}$ and a minimum level $L_{Min}$, depending on the geometry of said chamber 1, and by a control unit 32 that acts on the solenoid valves 33 and 34 located respectively on the duct IN and on the duct OUT 2.

Fig. 6b shows the hydrodynamic structure of the reactor of the invention in its first start-up step, which consist of taking the treatment chamber 1, for biological oxidation of the slurry fed inside it, to steady state operation.

In this step, the duct 4 and the pipe 6 that connect the treatment chambers 1, 2 and all the auxiliary systems associated therewith are active, so as to determine, the composition of the process zones A, B being equal, triggering of the biological oxidative reactions and increase of the temperature and of the concentration of solids in the slurry being treated, up to the predetermined values.

In this step, extraction of the aqueous fraction 31 from the duct OUT 2 is such as to balance introduction of the flow of slurry 11 input from the duct IN, so as to maintain the fill level of the treatment chambers 1, 2, and consequently of the entire reactor, constant. Instead, there is no extraction of the sludge fraction 30 from the duct OUT 1.

Upon reaching the operating conditions predetermined for the process zone A of the treatment chamber 1, recirculation carried out by the pipe 6 is interrupted by switching off the circulation pump 7a and closing the related shut-off valve 7b.

Fig. 6b shows the hydrodynamic condition of the reactor of the invention following closing of the pipe 6, which allows the its second start-up step, consisting of taking the process zone B of the treatment chamber 2, for concentration/dewatering of the fluid residue coming from the process zone A of the treatment chamber 1, to steady state operation.

This is obtained by continuing both to introduce the slurry being treated from the duct IN and to extract the aqueous phase 31 from the duct OUT 2, associated with the control means 16 of the fill level of the reactor. Instead, there is no extraction of the sludge fraction 30 from the duct OUT 1.

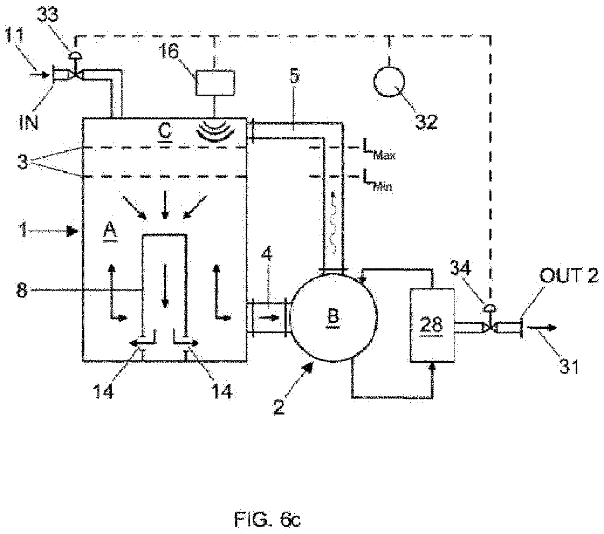

Upon reaching the steady state conditions of the process zone B of the treatment chamber 2, the reactor of the invention assumes the hydrodynamic condition shown in Fig. 6c, which allows extraction of the sludge fraction 30 from the duct OUT 1.

Table A indicatively sets out the optimal steady state conditions for carrying out the combined biological/mechanical thermophilic treatment of the slurry fed to the reactor of the invention as a function of the temperature and of the solid substance expressed as percentage by weight of the total solids.

Table A

| Parameters | Duct IN feed | 1st start-up chambers A, B | 2nd start-up chamber B | Steady state chamber A | Steady state chamber B |
|---|---|---|---|---|---|
| T (temperature) | ambient | 50 °C | $\geq 50°C$ | 50°C | $\geq 50°C$ |
| ST% (total solids) | 0 ÷ 6 % | 8 ÷ 12 % | 8 ÷ 20 % | 8-12 % | 20 ÷ 30 % |

**Claims**

1. Reactor with dual treatment chamber, particularly for slurry and sludge obtained from biological treatment plants, **characterized in that** comprises:

   - a first treatment chamber (1);
   - a second treatment chamber (2);
   - a first duct (4), adapted to hydraulically connect, directly and gravimetrically, said first and second chamber (1, 2);
   - a second duct (5), adapted to aeraulically connect said first and second chamber (1, 2) and to maintain their hydrostatic equilibrium,

   where the first treatment chamber (1) comprises feed means (IN) of a flow of slurry (11) and oxygenation means (9) adapted to determine a biological oxidation process of said flow of slurry (11) fed inside it and where said second treatment chamber (2) comprises concentration and dewatering means (28) adapted to determine a physical and mechanical treatment process of a fluid residue coming from the first treatment chamber (1).

2. Reactor according to claim 1, **characterized in that** it comprises a recirculation pipe (6) adapted to connect the treatment chambers (1, 2), provided with a circulation pump (7a) and with a shut-off valve (7b).

3. Reactor according to claim 1, **characterized in that** the first treatment chamber (1) comprises:

   - a process zone (A), adapted to define an oxygenation tank located in a lower portion of said first treatment chamber (1), dedicated to the performance of biochemical reactions for degradation of the organic substances contained in the flow of slurry (11) fed inside the chamber (1);
   - a process zone (C), arranged at the top of the first treatment chamber (1) above the process zone (A), adapted to define a gaseous volume for degassing the slurry being treated in the reactor and to offset the fill and emptying levels of the reactor;
   - a liquid/gaseous interface surface (3), adapted to separate said zones (A) and (C) and to define a fill level and a useful reaction volume of the chamber (1);
   - equipment (16) for controlling and regulating the hydrostatic level of the liquid/gaseous interface (3) and of the useful reaction volume of the process zone (A) of the chamber (1).

4. Reactor according to claim 1, **characterized in that** the treatment chamber (1) comprises a conveyor (8) arranged coaxially to said treatment chamber (1), open at the top and provided with openings (14) close to its base.

5. Reactor according to claim 1, **characterized in that** the first treatment chamber (1) comprises a cylindrical structure with a vertical axis.

6. Reactor according to claim 1, **characterized in that** the first treatment chamber (1) comprises at least one hydraulic circuit comprising:

   - a pipe (9) for intake of the slurry to be treated and for recirculation of the slurry being treated in the process zone (A) of the chamber (1);
   - feed means (IN) of a flow of slurry (11) to be treated, arranged on the pipe (9);
   - a circulation pump (10) arranged on the pipe (9), associated with a plurality of submerged diffusers (13), adapted to determine intake of the slurry to be treated and recirculation of the slurry being treated in the process zone (A) of the chamber (1);
   - means (12) for injecting liquid oxygen into the slurry to be treated, arranged on the pipe (9);
   - equipment (17) for controlling and regulating the concentration of liquid oxygen injected by the means (12) into the slurry to be treated.

7. Reactor according to claim 1, **characterized in that** the first treatment chamber (1) comprises a temperature control circuit comprising:

   - a pipe (18a), communicating with the process zone (A) of the chamber (1);
   - a circulation pump (18b), arranged on the pipe (18a);
   - a first heat exchanger (19), arranged on the pipe (18a);
   - a second heat exchanger (21), associated with the first heat exchanger (19);
   - an optional third heat exchanger (20), integrating the first heat exchanger (19);
   - equipment (23) for controlling and regulating the temperature of the process zone (A) of the chamber (1), associated with a valve (22) for regulating circulation of the cooling fluid of the heat exchangers (19 and 21).

8. Reactor according to claim 1, **characterized in that** the second treatment chamber (2) comprises:

   - a process zone (B), dedicated to the physical and mechanical concentration and dewatering treatment of a fluid residue coming from the process zone (A) of the chamber (1), through the duct (4);
   - at least one ultrafiltration device (28), adapted to determine a mechanical concentration and dewatering treatment of a fluid residue coming from the process zone (A) of the treatment chamber (1), through the duct (4);
   - an output duct (OUT 2) of the aqueous fraction (31) of the fluid residue treated by the at least one ultrafiltration device (28), associated with means 16 and 32 for controlling the fill level of the reactor;
   - an output duct (OUT 1) of the sludge fraction (30) of the liquid residue treated in the process zone (B) of the chamber (2), associated with an extraction pump (29).

9. Reactor according to claim 1, **characterized in that** the second treatment chamber (2) comprises a cylindrical structure with a vertical axis.

10. Reactor according to claim 1, **characterized in that** the second treatment chamber (2) comprises a temperature control circuit comprising:

   - a pipe (24), communicating with the process zone (B) of the chamber (2);
   - a circulation pump (25), arranged on the pipe (24);
   - a first and a second heat exchanger (35, 36), adapted to prevent the operating temperature of the process zone (B) of the chamber (2) from exceeding a predetermined limit threshold, arranged on the pipe (24);
   - an optional third heat exchanger (27), integrating the heat exchangers (35 and 36), arranged on the pipe (24);
   - means (26) for injecting liquid oxygen into the process zone (B) of the chamber (2), adapted to ensure that a minimum amount of oxygen is maintained in the process zone (B) of said chamber (2) and to avoid the onset of anaerobiosis phenomena inside it.

FIG. 1b

FIG. 1a

FIG. 2a

FIG. 3a

FIG. 3b

FIG. 5

FIG. 4

FIG. 6a

FIG. 6b

FIG. 6c

Europäisches
Patentamt

European
Patent Office

Office européen
des brevets

# EUROPEAN SEARCH REPORT

Application Number

EP 23 15 3230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/318735 A1 (BERTANZA GIORGIO [IT] ET AL) 20 December 2012 (2012-12-20) * figures 1-8 * * paragraph [0001] - paragraph [0093] * ----- | 1-10 | INV. C02F11/02 C02F11/12 C02F3/26 C02F3/12 |
| X | US 2008/302721 A1 (LANTING JELTE [US] ET AL) 11 December 2008 (2008-12-11) * figures 1-6 * * paragraph [0002] * * paragraph [0013] - paragraph [0082] * ----- | 1-10 | C02F11/121 ADD. C02F11/13 C02F1/44 |
| X | GB 2 368 837 A (UNITED UTILITIES PLC [GB]) 15 May 2002 (2002-05-15) * figures 1-2 * * page 1, line 1 - page 9, line 6 * ----- | 1-10 | |
| X | EP 1 990 318 A1 (KURARAY CO [JP]) 12 November 2008 (2008-11-12) * figures 1-5 * * paragraph [0001] - paragraph [0067] * ----- | 1-10 | |

TECHNICAL FIELDS
SEARCHED      (IPC)

C02F

The present search report has been drawn up for all claims

| Place of search | Date of completion of the search | Examiner |
|---|---|---|
| The Hague | 24 March 2023 | Zsigmond, Zoltán |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 15 3230

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2023

| Patent document cited in search report | | Publication date | Patent family member(s) | | Publication date |
|---|---|---|---|---|---|
| US 2012318735 | A1 | 20-12-2012 | BR | 112012018000 A2 | 03-05-2016 |
| | | | EP | 2526067 A1 | 28-11-2012 |
| | | | ES | 2558455 T3 | 04-02-2016 |
| | | | HR | P20151412 T1 | 12-02-2016 |
| | | | HU | E025875 T2 | 30-05-2016 |
| | | | IT | 1397708 B1 | 24-01-2013 |
| | | | PL | 2526067 T3 | 29-04-2016 |
| | | | PT | 2526067 E | 11-02-2016 |
| | | | SI | 2526067 T1 | 29-02-2016 |
| | | | US | 2012318735 A1 | 20-12-2012 |
| | | | WO | 2011089501 A1 | 28-07-2011 |
| US 2008302721 | A1 | 11-12-2008 | CA | 2448674 A1 | 19-12-2002 |
| | | | CA | 2792439 A1 | 19-12-2002 |
| | | | EP | 1409419 A1 | 21-04-2004 |
| | | | JP | 2004528981 A | 24-09-2004 |
| | | | MX | PA03010940 A | 27-02-2004 |
| | | | US | 2002192809 A1 | 19-12-2002 |
| | | | US | 2008302721 A1 | 11-12-2008 |
| | | | WO | 02100784 A1 | 19-12-2002 |
| GB 2368837 | A | 15-05-2002 | NONE | | |
| EP 1990318 | A1 | 12-11-2008 | BR | PI0706720 A2 | 05-04-2011 |
| | | | EP | 1990318 A1 | 12-11-2008 |
| | | | HR | P20161387 T1 | 02-12-2016 |
| | | | JP | 5390774 B2 | 15-01-2014 |
| | | | JP | WO2007086240 A1 | 18-06-2009 |
| | | | TW | I422536 B | 11-01-2014 |
| | | | US | 2010219126 A1 | 02-09-2010 |
| | | | WO | 2007086240 A1 | 02-08-2007 |

EPO FORM P0459

For more details about this annex : see Official Journal of the European Patent Office, No. 12/82